# EUROPEAN PATENT APPLICATION

(11) **EP 4 408 037 A1**
(43) Date of publication of application: **31.07.2024**
(21) Application number: 22871884.7
(22) Date of filing: 16.09.2022
(51) Int. Cl.: H04W 4/12

(54) **INFORMATION RECEIVING METHOD AND APPARATUS, INFORMATION REPORTING METHOD AND APPARATUS, AND DEVICE AND COMPUTER STORAGE MEDIUM**

(30) Priority: 22.09.2021 CN 202111109325
(71) Applicant: Vivo Mobile Communication Co., Ltd., Dongguan, Guangdong 523863 (CN)
(72) Inventor: YOU, Huazheng, Dongguan, Guangdong 523863 (CN); ZHANG, Yizhong, Dongguan, Guangdong 523863 (CN); SUN, Xiaodong, Dongguan, Guangdong 523863 (CN); KE, Xiaowan, Dongguan, Guangdong 523863 (CN); JIANG, Wei, Dongguan, Guangdong 523863 (CN)
(74) Representative: Lavoix
(86) International application number: PCT/CN2022/119273
(87) International publication number: WO 2023/045838

(57) **Abstract**

This application discloses an information receiving method and apparatus, an information reporting method and apparatus, a device, and a computer storage medium. The method includes: a first communication device receiving first information from a radio access network device; and the first communication device executing a first operation according to the first information, where the first information includes one or more of the following: a situation of transmission of the radio access network device; information of one or more transmission units; information of an HDRLL service; a transmission condition of the radio access network device; configuration information of the radio access network device; and a quality of service (QoS) adjustment request of the HDRLL service.

## Description

### CROSS-REFERENCE TO RELATED APPLICATIONS

This application claims the priority of Chinese Patent Application No. 202111109325.X filed in China on September 22, 2021, and the entire content of which is hereby incorporated by reference.

### TECHNICAL FIELD

This application belongs to the technical field of communications, and in particular to an information receiving method and apparatus, an information reporting method and apparatus, a device, and a computer storage medium.

### BACKGROUND

Some high data rate low latency (High Data Rate Low Latency, HDRLL) services (such as extended reality (Extended reality, XR)) have the characteristics of high data rate, high reliability, low latency, and the like, which poses high requirements for mobile communication systems. At present, a service source end (such as an application server (application server)) of the HDRLL services is not aware of the transmission quality on a radio access network (Radio Access Network, RAN) side, and cannot adjust the HDRLL services based on the feedback from the RAN side.

### SUMMARY

Embodiments of this application provide an information receiving method and apparatus, an information reporting method and apparatus, a device, and a computer storage medium, which can solve the problem that a service source end cannot adjust HDRLL services based on the feedback from the RAN side.

According to a first aspect, an information receiving method is provided, including:

receiving, by a first communication device, first information from a radio access network device; and executing, by the first communication device, a first operation according to the first information, where the first information includes one or more of the following: a situation of transmission of the radio access network device; information of one or more transmission units; information of an HDRLL service; a transmission condition of the radio access network device; configuration information of the radio access network device; and a QoS adjustment request of the HDRLL service.

According to a second aspect, an information reporting method is provided, including:

sending, by a radio access network device, first information to a first communication device, where the first information includes one or more of the following: a situation of transmission of the radio access network device; information of one or more transmission units; information of an HDRLL service; a transmission condition of the radio access network device; configuration information of the radio access network device; and a QoS adjustment request of the HDRLL service.

According to a third aspect, an information receiving apparatus is provided, including: a second receiving module, configured to receive first information; and an execution module, configured to execute a first operation according to the first information, where the first information includes one or more of the following: a situation of transmission of a radio access network device; information of one or more transmission units; information of an HDRLL service; a transmission condition of the radio access network device; configuration information of the radio access network device; and a QoS adjustment request of the HDRLL service.

According to a fourth aspect, an information reporting apparatus is provided, including: a first sending module, configured to send first information to a first communication device, where the first information includes one or more of the following: a situation of transmission of a radio access network device; information of one or more transmission units; information of an HDRLL service; a transmission condition of the radio access network device; configuration information of the radio access network device; and a QoS adjustment request of the HDRLL service.

According to a fifth aspect, a communication device is provided, including: a processor, a memory, and a program stored on the memory and executable on the processor, where the program, when executed by the processor, implements steps of the method as described in the first aspect or the second aspect.

According to a sixth aspect, a readable storage medium is provided. The readable storage medium stores a program or an instruction, where the program or instruction, when executed by a processor, executes steps of the method as described in the first aspect or the second aspect.

According to a seventh aspect, a computer program/program product is provided. The computer program/program product is stored in a storage medium. The computer program/program product is executed by at least one processor to implement steps of the processing method as described in the first aspect or the second aspect.

According to an eighth aspect, a chip is provided. The chip includes a processor and a communication interface; the communication interface is coupled to the processor; and the processor is configured to run a program or an instruction to implement steps of the processing method as described in the first aspect or the second aspect.

According to a ninth aspect, a communication device is provided and is configured to execute steps of the processing method as described in the first aspect or the second aspect.

In the embodiments of this application, through information reporting between the radio access network device and the first communication device, the first communication device can perform adaptive service feature adjustment (in, such as, a video encoding way and a service generation/sending way) or QoS adjustment on the HDRLL service according to the first information reported by the radio access network device, to help the radio access network device in better completing data transmission, thus improving the system performance and the user experience.

### BRIEF DESCRIPTION OF THE DRAWINGS

FIG. 1 is a first schematic diagram of an XR service;
FIG. 2 is a second schematic diagram of an XR service;
FIG. 3 is a schematic diagram of a 5G network architecture;
FIG. 4 is a flowchart of an information reporting method according to an embodiment of this application;
FIG. 5 is a flowchart of an information receiving method according to an embodiment of this application;
FIG. 6 is a schematic diagram of information of generation time of transmission units in an embodiment of this application;
FIG. 7 is a schematic diagram of a service sending way in an embodiment of this application;
FIG. 8a is a schematic diagram showing that RAN configuration information is not reported;
FIG. 8b is a schematic diagram showing that RAN configuration information is reported;
FIG. 9 is a first schematic diagram of establishing a dedicated channel between an AF and a RAN according to an embodiment of this application;
FIG. 10 is a second schematic diagram of establishing a dedicated channel between an AF and a RAN according to an embodiment of this application;
FIG. 11 is a schematic diagram of an information reporting apparatus according to an embodiment of this application;
FIG. 12 is a schematic diagram of an information receiving apparatus according to an embodiment of this application; and
FIG. 13 is a schematic diagram of a communication device according to an embodiment of this application.

### DETAILED DESCRIPTION

The technical solutions in embodiments of this application are clearly and completely described below with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application. The technical solutions in the embodiments of this application are clearly described below with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application.

This specification and claims of this application, and terms "first" and "second" are used to distinguish similar objects, but are unnecessarily used to describe a specific sequence or order. It should be understood that terms used like this is interchangeable where appropriate, so that the embodiments of this application can be implemented in an order other than those illustrated or described here. Furthermore, objects distinguished by "first", "second", and the like are usually of the same class and do not limit the number of objects. For example, the first object can be one or multiple. In addition, "and" used in this specification and the claims represents at least one of the connected objects. Symbol "/" usually represents an "or" relationship between front and back associated objects.

It is worth noting that the technology described in the embodiments of this application is not limited to a new radio (New Radio, NR) system and a long term evolution (Long Term Evolution, LTE)/LTE Evolution (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technology can be applied to both the aforementioned systems and radio technologies, as well as other systems and radio technologies. The following description describes the NR system for the example purpose and uses the term NR in most of the following descriptions. However, these technologies can also be applied to applications other than the NR system application, such as a 6^{th} generation (6^{th} Generation, 6G) communication system.

In order to facilitate a better understanding of the embodiments of this application, the following technical points will be introduced first:

### I. About XR service

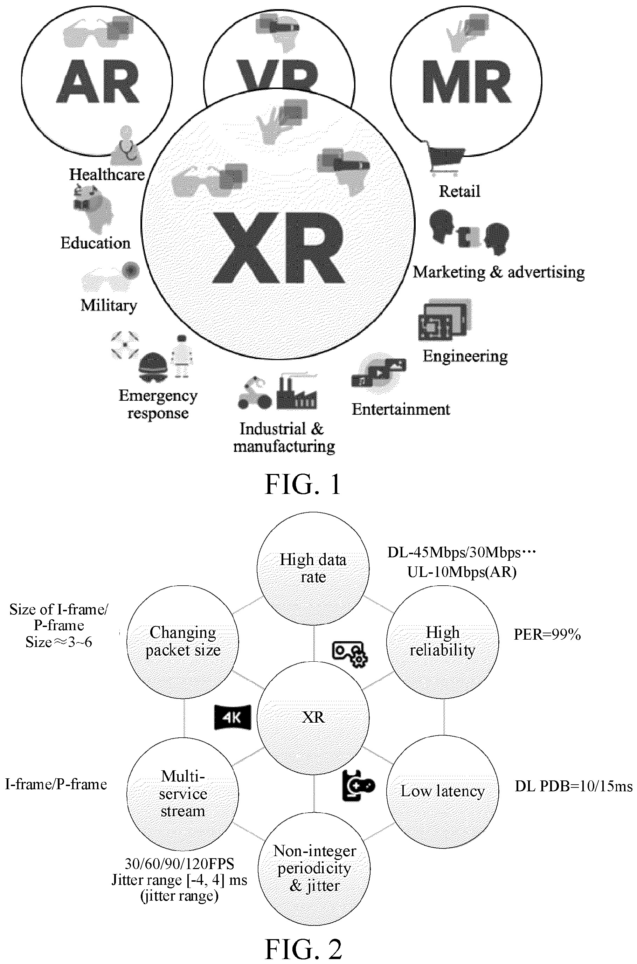

XR refers to a combination of real and virtual environments and human-computer interaction devices, and is implemented using a computer technology and a wearable device. X represents a variable, which can be a current or future spatial computing technology. As shown in FIG. 1, XR includes an augmented reality (Augmented Reality, AR), mixed reality (Mixed Reality, MR), a virtual reality (Virtual Reality, VR), and regions between them. Compared to traditional videos, the VR brings an unprecedented immersive experience. The AR is a technology that "seamlessly" integrates real-world information with virtual-world information. The MR is a combination of the VR and the AR, which perfectly combines the virtual reality and the augmented reality to provide a new visual environment. The significance of the XR lies in extension of human experience, especially regarding the sense of existence (presented by the virtual reality) and the acquisition of cognition (presented by the augmented reality). With the continuous development of the human-computer interaction technology, these meanings are still evolving.

As shown in FIG. 2, an XR service has a high data rate, a high reliability requirement, a low latency requirement, a non-integer periodicity, a packet arrival time jitter, a multi-service stream, a varying packet size, and other characteristics, which pose a high requirement for mobile communication systems.

### II. About multi-stream service transmission

To achieve an immersive user experience, a multimedia service (such as XR) includes transmission of various data streams. From the perspective of data types, the multimedia service can be classified into a video stream, an audio stream, action transformation, and other control streams.

For video transmission, there are also various transmission schemes such as a full view transmission and a field of view (Field of View, FOV) transmission. The full view transmission scheme is to transmit all 360° surround pictures to a terminal. When a user turns the head and needs to switch the pictures, all processing is completed locally at the terminal, which poses an extremely high transmission requirement. The FOV transmission scheme is to divide a 360° panoramic field of view into several field of views, and generates a video file for each field of view, where the video file only contains high-resolution visual information within the field of view and some low-resolution visual information around it, and transmits a corresponding field of view file to the user according to a position of a field of view posture of the user. This transmission scheme involves transmission of various data streams including FOV streams and non-FOV streams.

Since data volumes in an original video are quite large, video compression is still required, which means removing some redundancies from original data before transmission or storage, to lower requirements for a bandwidth and a storage space. During video encoding, three types of frames will be generated, which are the following:

(1) I-frame: It is an intra-frame, which is a key frame, meaning that the entire frame of picture is retained. Decoding can be completed only by the current frame of data, which requires a large amount of information occupied by the data.

(2) P-frame: It is a forward predictive coded frame. The P-frame represents a difference between a current frame and a previous key frame (or P-frame). During decoding, a previously cached picture needs to be superimposed with a difference defined in the current frame to generate a final picture. A compression ratio of the P-frame is high, but it may cause diffusion of a decoding error.

(3) B-frame: It is a bidirectional interpolated prediction frame, recording differences between a current frame and previous and latter frames. To decode a B-frame, both a previous cached picture and a decoded picture need to be obtained. A final picture is obtained by superimposing the previous and latter pictures with the current frame of data. A compression ratio of the B-frame is the highest.

Therefore, there will be multiple data streams transmitted simultaneously in some multimedia services.

### III. About 5G network architecture

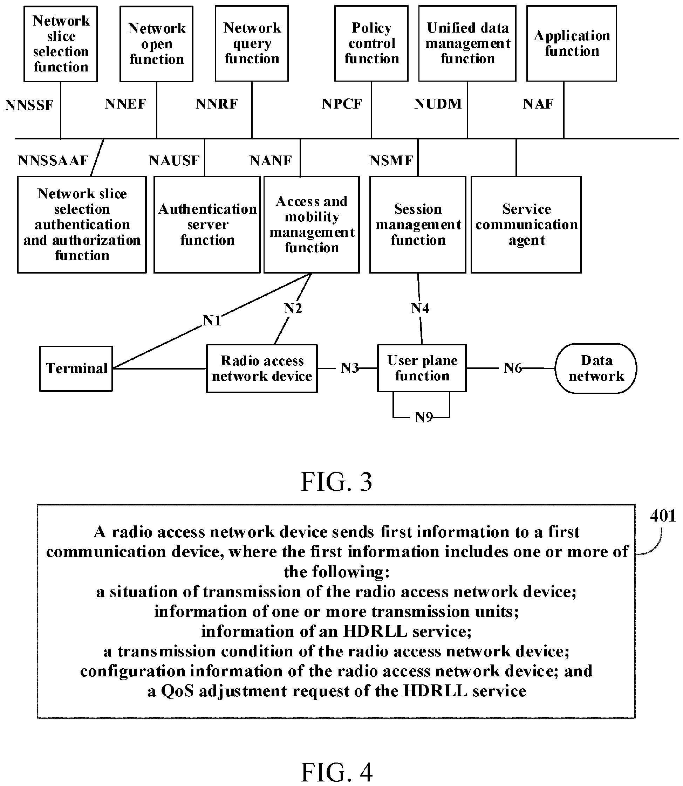

As shown in FIG. 3, connection and interaction are carried out in the form of network nodes. Important network nodes include an application function (Application Function, AF), an access and mobility management function (Access and Mobility Management Function, AMF), a session management function (Session Management Function, SMF), a user plane function (User Plane Function, UPF), a radio access network (Radio Access Network, RAN) device, and a terminal (such as user equipment (User Equipment, UE)).

The radio access network device can be a base station. The base station can be referred to as a node B, an evolution node B, an access point, a base transceiver station (Base Transceiver Station, BTS), a radio base station, a radio transceiver, a basic service set (Basic Service Set, BSS), an extended service set (Extended Service Set, ESS), a B node, a next generation Node B (gNB), a home B node, a home evolution type B node, a wireless local area network (Wireless Local Area Network, WLAN) access point, a wireless fidelity (Wireless Fidelity, WiFi) node, a transmitting receiving point (Transmitting Receiving Point, TRP), a radio access network node, or any other suitable term in the art, as long as the same technical effects are achieved. The base station is not limited to a specified technical vocabulary. It should be noted that, in the embodiments of this application, only the base station in the new radio (New Radio, NR) system is taken as an example, but a specific type of the base station is not limited.

The terminal can be a mobile phone, a tablet personal computer (Tablet Personal Computer), a laptop computer (Laptop Computer) or also referred to as a laptop, a personal digital assistant (Personal Digital Assistant, PDA), a handheld computer, a netbook, ultra-mobile personal computer (Ultra-Mobile Personal Computer, UMPC), a mobile internet device (Mobile Internet Device, MID), an augmented reality (augmented reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), a smart home (home devices with wireless communication functions, such as a refrigerator, a television, a washing machine, or furniture), and other terminal side devices. The wearable device includes: a smart watch, a smart hand ring, a smart headphone, smart glasses, a smart jewelry (a smart bracelet, a smart chain, a smart ring, a smart necklace, a smart bangle, a smart anklet, and the like), a smart wristband, smart clothing, a game console, and the like. It should be noted that, in the embodiments of this application, a specific type of the terminal is not limited.

Referring to FIG. 4, the embodiments of this application provide an information reporting method. Specific steps include: Step 401.

Step 401: A radio access network device sends first information to a first communication device, where the first information includes one or more of the following:
(1) a situation of transmission of the radio access network device, such as a situation that the radio access network device transmits a high data rate low latency (High Data Rate Low Latency, HDRLL) service.
   The HDRLL service is a general term of a type of services, namely, high data rate low latency services, for example, cloud gaming (cloud gaming), cloud AR (cloud AR), cloud VR, XR, and remote AV production (remote AV production).
(2) information of one or more transmission units.
   Optionally, the transmission units can include one or more of the following: (a) a packet, where the packet includes one or more of the following: an IP packet (IP packet), a left-eye packet provided for a user, and a right-eye packet provided for the user; (b) a frame (frame); (c) an I-frame; (d) a P-frame; (e) a B-frame; (f) a data stream (stream/flow); and (g) an application data unit (Application Data Unit, ADU).
   It can be understood that the information of one or more transmission units can be reported simultaneously. For example: if the I-frame serves as one transmission unit and the P-frame serves as another transmission unit, the first information reported will be divided into two sets: a transmission error probability, transmission delay, packet size, and the like of the I-frame, and a transmission error probability, transmission delay, packet size, and the like of the P-frame.
(3) information of an HDRLL service.
   Optionally, the information of an HDRLL service can include one or more of the following: (a) a data rate of the HDRLL service, for example, a data rate (Data rate) of a VR service is 30 Mbps; (b) a generation way of the HDRLL service, for example, a compression encoding way and a rendering way used by the first communication device during generation of services; (c) a sending way of the HDRLL service, for example, simultaneously sending left-eye data and right-eye data or alternately sending left-eye data and right-eye data; (d) a quantization parameter (Quantization parameter) of the HDRLL service. Optionally, the quantization parameter can be a service-source video encoding parameter; and (e) an encoding way of the HDRLL service.
(4) a transmission condition of the radio access network device.
   Optionally, the transmission condition of the radio access network device can include one or more of the following: (a) a channel quality indication; (b) an unexpected service volume; (c) a channel deep fading indication; and (d) a terminal scheduling congestion indication.
(5) configuration information of the radio access network device.
   Optionally, the configuration information of the radio access network device can include one or more of the following: (a) configuration information of connected discontinuous reception (Connected Discontinuous Reception, CDRX); (b) CDRX configuration update information; (c) wake up signaling (Wake Up Signaling, WUS) configuration information; (d) monitoring occasion (monitoring occasion) of physical downlink control channel (Physical Downlink Control Channel, PDCCH); and (e) information of PDCCH monitoring adaptation.
(6) a quality of service (Quality of Service, QoS) adjustment request of the HDRLL service.

Optionally, a content in the QoS adjustment request includes one or more of the following: (a) a QoS flow Identifier value (QoS Flow ID, QFI); (b) a 5G QoS Identifier (5G QoS ID, 5QI) value; and (c) a priority.

Optionally, the first communication device (or described as a service source end) herein may include one or more of the following: a core network device (such as an application function (Application Function, AF) and an application server (Application server)).

In an implementation of this application, the situation of transmission of the radio access network device can include one or more of the following:
(1) a transmission error rate of the one or more transmission units;
(2) a transmission success rate of the one or more transmission units,
such as a transmission success rate of an I-frame;
(3) ratios of the transmission error rates of different transmission units;
(4) ratios of the transmission success rates of different transmission units;
such as a ratio of the transmission success rates of an I-frame to a P-frame;
(5) a transmission delay of the one or more transmission units;
such as a packet delay budget (Packet Delay Budget, PDB) of the I-frame being 15 ms, and a PDB of the P-frame being 10 ms;
(6) ratios of the transmission delays of different transmission units;
(7) a quality indication of the HDRLL service,
such as XR quality index (XR Quality Index, XQI); and
(8) re-buffer times or duration (re-buffer times/duration).

In an implementation of this application, the information of one or more transmission units can include one or more of the following:
(1) a data volume of the one or more transmission units,
   such as an average bit number, a minimum bit number, or a maximum bit number of each transmission unit;
(2) ratios of the data volumes of different transmission units;
(3) a service packet size of the one or more transmission units;
(4) ratios of the service packet sizes of different transmission units,
   such as an average packet size ratio of the I-frame to the P-frame (such as an alpha value (alpha value));
(5) a number proportion of the one or more transmission units,
   for example, if a group of pictures (Group of picture, GOP) contains one I-frame and (N-1) P-frames, the first information can be a number ratio (N-1) of the I-frame to the P-frames, or a GOP size (size) N;
(6) ratios of number of different transmission units; and
(7) information of generation time of the one or more transmission units.

Optionally, the information of generation time includes one or more of the following: (a) a generation periodicity of each transmission unit; (b) a generation number of transmission units within unit time, such as a frame rate; (c) a generation time interval between different transmission units; (d) a generation periodicity of a transmission unit group composed of a plurality of transmission units; (e) a generation number of transmission unit groups within unit time; and (f) a generation time interval between different transmission unit groups, such as a generation interval between right-eye data and left-eye data.

In an implementation of this application, a content of the first information has one of the following characteristics:
(1) The content carried in the first information represents a value of a current configuration of the radio access network device, or a value of a current transmission condition, or a value of a predicted future transmission condition, or a statistical value of a currently transmitted HDRLL service, or a recommended value.
(2) The content carried in the first information represents that the radio access network device recommends a decrease or an increase.
(3) The content carried in the first information represents a value of a decrease or an increase recommended by the radio access network device.
   That is, (1) to (6) in the first information above can be an actual transmitted value/recommended value, or a recommended decrease/increase, or a recommended value of decrease/increase.
(4) The first information carries ratios or correspondence relationships between different contents.

That is, the content in the first information can also be the ratios or correspondence relationships between different pieces of information, such as the ratios or correspondence relationships between the ratios of the transmission delays of different transmission units and the ratios of the data volumes of different transmission units.

In an implementation of this application, step 501 may include the following:
The radio access network device sends the first information to the first communication device through a first channel (or described as a dedicated channel), where the first channel is a dedicated channel between the first communication device and the radio access network device.

In an implementation of this application, before step 501, the method may further include the following:
The radio access network device performs mapping according to the situation of transmission of the radio access network device, or the transmission condition of the radio access network device, or the configuration information of the radio access network device, or information recommended by the radio access network device and related to the HDRLL service, to obtain the QoS adjustment request of the HDRLL service.

In an implementation of this application, after step 501, the method further includes the following:
The radio access network device receives second information from the first communication device; and
the radio access network device stops or pauses the sending of the first information to the first communication device according to the second information.

In an implementation of this application, the second information represents that the first communication device has successfully received the first information.

Optionally, the second information can include first indication information, and the first indication information can include one or more of the following:
(1) a first timer, where the radio access network device stops or pauses the sending of the first information to the first communication device before the first timer expires;
(2) an indication bit, where
   for example, the indication bit can be "1", indicating that the first communication device has successfully received the first information; or "1", indicating that the radio access network device starts a second timer; or "1", indicating that the first communication device has successfully received the first information and instructed the radio access network device to start a second timer; or "0", indicating that the radio access network device pauses or stops reporting of the first information; or "1", indicating that the first communication device has successfully received the first information and instructed the radio access network to pause or stop the reporting of the first information; and
(3) a cause value (cause value).
   For example, the cause value is a cause why the first communication device instructs the radio access network device to stop the reporting of the first information, for example: If the cause value is "1", it indicates that the first communication device has performed adjustment according to the first information; if the cause value is "2", it indicates that an existing configuration of the first communication device is consistent with the first information; and if the cause value is "3", it indicates that the first communication device does not use or ignore the first information reported by the radio access network device.

In an implementation of this application, the radio access network device stops or pauses the sending of the first information to the first communication device according to the second information, including one of the following ways:
Way 1: The radio access network device starts the first timer according to the second information; and the radio access network device stops or pauses the sending of the first information to the first communication device before the first timer expires.
Way 2: The radio access network device starts the second timer according to the second information, where the second timer is configured by the radio access network device, configured by the first communication device, or configured by the radio access network device according to a local policy; and the radio access network device stops or pauses the sending of the first information to the first communication device before the second timer expires.

It can be understood that the second timer can be started according to the indication bit in the first indication information included in the second information. The second timer is mainly configured to distinguish the first timer directly indicated by the first indication information.

In an implementation of this application, step 501 may include one of the following ways:
Way 1: The radio access network device sends the first information to the first communication device according to a reporting periodicity.

Optionally, the reporting periodicity is configured by the radio access network device, configured by the first communication device, or configured according to a local policy of the radio access network device.

Way 2: The radio access network device receives second indication information from the first communication device; and the radio access network device sends the first information to the first communication device according to the second indication information.

Way 3: The radio access network device sends the first information to the first communication device according to first time (or described as a time window/timer), namely, the radio access network device sends the first information to the first communication device according to time triggering.

In an implementation of this application, the radio access network device sends the first information to the first communication device according to first time, which can include:
The radio access network device detects, within the first time, whether a first condition is satisfied;
the radio access network device sends the first information to the first communication device at the moment that the first condition is satisfied, or the radio access network device sends, in a case that the first condition is satisfied, the first information to the first communication device at the end of the first time,
where the first condition includes one or more of the following:
   (1) a measurement quantity of the radio access network device (such as a channel quality indication (Channel Quality Indicator, CQI), a modulation and coding scheme (Modulation and Coding Scheme, MCS), a signal to interference plus noise ratio (Signal to Interference plus Noise Ratio, SINR), or a reference signal receiving power (Reference Signal Receiving Power, RSRP)) is less than a preset threshold value;
   (2) the radio access network device receives a plurality of continuous negative acknowledgments (Negative ACKnowledgment, NACK);
      for a transmitted HDRLL service, if the terminal fails to receive it, a NACK will be triggered to be reported to the radio access network device;
   (3) the configuration information of the radio access network device changes;
      for example, the configuration information of CDRX and the WUS configuration information changes; and
   (4) an HDRLL service packet has not been scheduled or is not completely scheduled within a PDB.

In an implementation of this application, a start condition of the first time includes one or more of the following:
(1) a start periodicity of the first time is satisfied;
   optionally, the start periodicity is configured by the radio access network device, configured by the first communication device, or configured according to a local policy of the radio access network device;
(2) the radio access network device receives a plurality of NACKs;
   for a transmitted HDRLL service, if the terminal fails to receive it, a NACK will be triggered to be reported to the radio access network device;
(3) the configuration information of the radio access network device changes;
   for example, the configuration information of CDRX and the WUS configuration information changes; and
(4) the radio access network device receives third information sent by the first communication device, where the third information indicates start of the first time.

In an implementation of this application, a length of the first time is configured by the radio access network device, configured by the first communication device, or configured according to a local policy of the radio access network device.

In an implementation of this application, a unit of the transmission delay or the re-buffer times or the duration or the generation periodicity or the unit time or the generation time or the first timer or the second timer or the reporting periodicity or the first time or the start periodicity includes one of the following: second, millisecond, frame, subframe, slot, and symbol.

In the embodiments of this application, through information reporting between the radio access network device and the first communication device, the first communication device can perform adaptive service feature adjustment (in, such as, a video encoding way and a service generation/sending way) or QoS adjustment on the HDRLL service according to the first information reported by the radio access network device, to help the radio access network device in better completing data transmission, thus improving the system performance and the user experience.

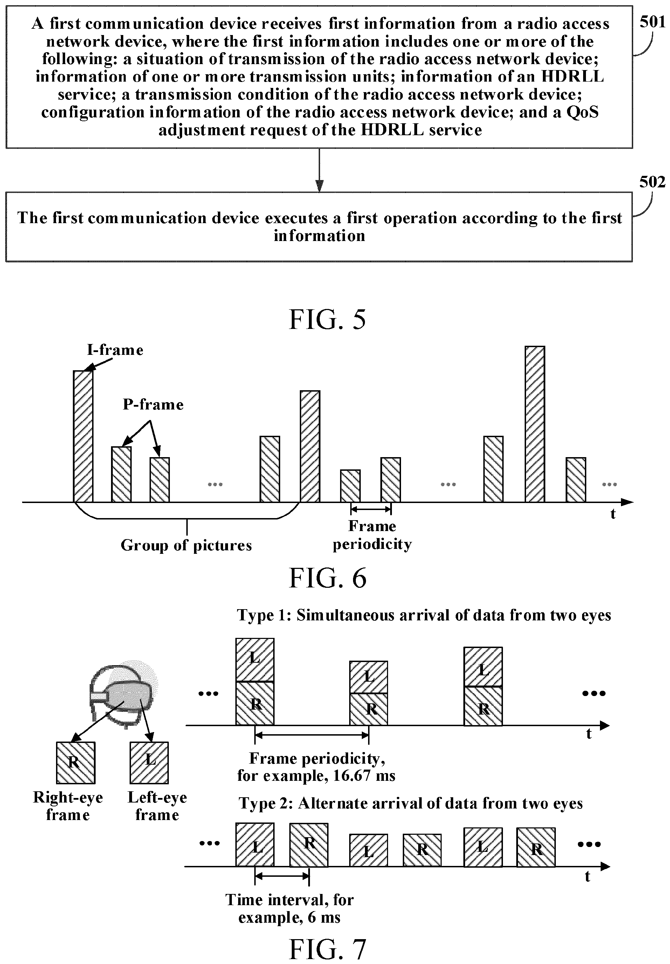

Referring to FIG. 5, the embodiments of this application provide an information receiving method. Specific steps include: step 501 and step 502.

Step 501: A first communication device receives first information from a radio access network device.

Step 502: The first communication device executes a first operation according to the first information,
where the first information includes one or more of the following:
(1) a situation of transmission of the radio access network device, such as a situation that the radio access network device transmits an HDRLL service.
(2) information of one or more transmission units.

Optionally, the transmission units can include one or more of the following: (a) a packet, where the packet includes one or more of the following: an IP packet, a left-eye packet provided for a user, and a right-eye packet provided for the user; (b) a frame; (c) an I-frame; (d) a P-frame; (e) a B-frame; (f) a data stream; and (g) an application data unit.

(3) information of an HDRLL service.

Optionally, the information of an HDRLL service can include one or more of the following: (a) a data rate of the HDRLL service; (b) a generation way of the HDRLL service; (c) a sending way of the HDRLL service; (d) a quantization parameter of the HDRLL service; and (e) an encoding way of the HDRLL service.

(4) a transmission condition of the radio access network device.

Optionally, the transmission condition of the radio access network device can include one or more of the following: (a) a channel quality indication; (b) an unexpected service volume; (c) a channel deep fading indication; and (d) a terminal scheduling congestion indication.

(5) configuration information of the radio access network device.

Optionally, the configuration information of the radio access network device can include one or more of the following: (a) configuration information of CDRX; (b) CDRX configuration update information; (c) WUS configuration information; (d) monitoring occasion of PDCCH; and (e) information of PDCCH monitoring adaptation.

(6) a QoS adjustment request of the HDRLL service.

Optionally, a content in the QoS adjustment request includes one or more of the following: (a) a QFI value; (b) a 5QI value; and (c) a priority.

Optionally, the first communication device herein may include one or more of the following: a core network device and an application server.

In an implementation of this application, a content of the first information has one of the following characteristics:
(1) The content carried in the first information represents a value of a current configuration of the radio access network device, or a value of a current transmission condition, or a value of a predicted future transmission condition, or a statistical value of a currently transmitted HDRLL service, or a recommended value.
(2) The content carried in the first information represents that the radio access network device recommends a decrease or an increase.
(3) The content carried in the first information represents a value of a decrease or an increase recommended by the radio access network device.
(4) The first information carries ratios or correspondence relationships between different.

That is, the content in the first information can also be the ratios or correspondence relationships between different pieces of information, such as the ratios or correspondence relationships between the ratios of the transmission delays of different transmission units and the ratios of the data volumes of different transmission units.

In an implementation of this application, the method further includes the following: The first communication device executes a first operation according to the first information,
where the first operation includes one of the following:
(1) adjusting the HDRLL service according to the first information;
   For example, the first communication device can perform adaptive adjustment according to the received first information (for example, the first information represents an actual receiving situation or a recommended value of the radio access network device), and can adjust related parameters according to the first information or directly adjust the first information to a recommended parameter.
(2) not adjusting the HDRLL service according to the first information; and
   For example, the first communication device can also not be adjusted after analyzing system performance according to the first information, such as, detecting that the system performance has met a performance requirement.
(3) ignoring the received first information.

Optionally, the adjustment described above includes one or more of the following: (a) adjusting the QoS, such as initiating a Qos modification (modification) process; and (b) adjusting a service feature of the HDRLL service.

Optionally, the service feature includes one or more of the following:
(1) a data volume of the one or more transmission units;
(2) ratios of the data volumes of different transmission units;
(3) a service packet size of the one or more transmission units;
(4) ratios of the service packet sizes of different transmission units;
(5) a number proportion of the one or more transmission units;
(6) ratios of number of different transmission units;
(7) information of generation time of the one or more transmission units;
(8) a data rate of the HDRLL service;
(9) a generation way of the HDRLL service;
(10) a sending way of the HDRLL service;
(11) a quantization parameter of the HDRLL service; and
(12) an encoding way of the HDRLL service.

For example, a code rate is increased or decreased, or a quantization parameter is increased or decreased, or an alpha value is adjusted.

In an implementation of this application, step 501 includes the following:

The first communication device receives the first information from the radio access network device through a first channel, where the first channel is a dedicated channel between the first communication device and the radio access network device.

In an implementation of this application, after step 501, the method further includes the following:

The first communication device sends second information to the radio access network device, where the second information is used for assisting the radio access network device in stopping or pausing the sending of the first information.

It can be understood that the first communication device will send a stop/pause indication information as long as it receives the first information (for example, a power configuration of the radio access network device or capability information of a RAN is received, or the first communication device will not use the first information reported by the radio access network device); or, the first communication device sends the stop/pause indication information after making a determination according to the first information.

Optionally, the second information represents that the first communication device has successfully received the first information.

Optionally, the second information can include first indication information, and the first indication information includes one or more of the following:
(1) a first timer, where the radio access network device stops or pauses the sending of the first information to the first communication device before the first timer expires;
(2) an indication bit; and
(3) a cause value.

In another implementation of this application, after step 501, the method further includes the following:
The first communication device receives the first information from the radio access network device within second time (or a time window or a timer), and sends, in a case of satisfying a second condition, second information to the radio access network device, where the second information is used for assisting the radio access network device in stopping or pausing the sending of the first information.

Optionally, the second condition includes one or more of the following:
(1) within the second time, transmission quality of the radio access network device is greater than a preset threshold value;
(2) within the second time, the first information sent by the radio access network device does not change;
   for example, the first information sent has always been a recommendation for alternately sending left-eye data and right-eye data; or, the first information sent always recommends that a ratio of service packet sizes of an I-frame to a P-frame is 1.5 (it is meaningless that the radio access network device keeps reporting duplicate information, so the first communication device sends the second information that instructs the radio access network device to stop/pause the reporting).
(3) within the second time, the first information sent by the radio access network device does not change; and
   for example, the first information sent indicates that: a transmission error rate of an I-frame/P-frame/B-frame has changed from 15% to 10% (indicating that the transmission quality of the radio access network device has been improved); or, it is recommended that the ratio of the service packet sizes of the I-frame to the P-frame has changed from 1.5 to 3 (indicating an increase in the carrying capacity of the radio access network device).
(4) within the second time, the first information sent by the radio access network device is consistent with a behavior or configuration of the first communication device.

For example, the first information sent indicates that: it is recommended that a quantization parameter for video encoding is 18, and a quantization parameter used by the first communication device is indeed 18, (The radio access network device does not know the configuration of the first communication device clearly, such as, the quantization parameters, the ratios of the number of different transmission units, the generation way of the HDRLL service, and the like, and the value recommended by the radio access network device may be exactly the current configuration of the first communication device).

Optionally, a length within the second time is configured by the first communication device, or configured according to a local policy of the first communication device.

A unit herein of the transmission delay or the re-buffer times or the duration or the generation periodicity or the unit time or the generation time or the first timer or the second time or the generation time interval includes one of the following: second, millisecond, frame, subframe, slot, and symbol.

In the embodiments of this application, the first communication device can perform adaptive service feature adjustment (in, such as, a video encoding way and a service generation/sending way) or QoS adjustment on the HDRLL service according to the first information reported by the radio access network device, to help the radio access network device in better completing data transmission, thus improving the system performance and the user experience.

The implementations of this application will be introduced below in combination with Embodiment I to Embodiment VII.

Embodiment I: The first information includes a situation of transmission of a radio access network device.

Way I: For downlink (Downlink, DL) transmission, a packet data convergence protocol (Packet Data Convergence Protocol, PDCP)/radio link control (Radio Link Control, RLC) layer of the radio access network device (such as a base station (gNB)) reports a transmission unit error probability, or recommends an increase or decrease error probability, or recommends increase or decrease error probability value to the first communication device. Then, the first communication device performs adaptive increase adjustment according to the information, such as adjusting the service sending way (such as adjusting the service sending way to alternately sending left-eye service packets and right-eye service packets) or adjusting the video encoding way/configuration (such as adjusting the ratios of the packet sizes of the I-frame and the P-frame and the number proportions of the I-frame and the P-frame), so as to reduce the PER of the RAN side and obtain a better user experience. Or, the first communication device can modify a QoS according to the received information and trigger a QoS modification (modification) process to select a more suitable QoS for data transmission, so as to improve the user experience.

Way II: The radio access network device maps the recommended increase/decrease error probability or the recommended increase/decrease error probability value to a QoS adjustment request and sends the QoS adjustment request to the first communication device. A specific content of the QoS adjustment request includes, but is not limited to, one or more of the following: a QFI value (QFI value), a 5QI value (5QI value), and a priority.

Embodiment II: The first information includes a data volume or a service packet size of a transmission unit.

Referring to FIG. 6, if a group of pictures (Group of picture, GOP) contains one I-frame and (K-1) P-frames, the first information can be an average bit number, a minimum bit number, and a maximum bit number of the I-frame or the P-frame; or, an average packet size ratio of the I-frame to the P-frame. If a current average packet size ratio of the I-frame to the P-frame is α= 3, the radio access network device has found that the unexpected service volume at some moments (for example, the arrival time of the I-frame) is extremely large and the PER is extremely high. The radio access network device can use a channel, established in a core network (Core Network, CN), between the radio access network device and the first communication device to recommend the first communication device to have a decrease of α or recommend the first communication device to use α=1.5. The first communication device adjusts the video encoding way according to the received first information, such as using α=1.5, thereby avoiding sudden generation of a very large packet at a certain moment, alleviating a scheduling and transmission load on the radio access network device, improving the PER of the RAN side, and obtaining a better user experience.

Embodiment III: The first information includes a sending way of the HDRLL service.

If the current first communication device simultaneously transmits left-eye packets and right-eye packets in DL, when the radio access network device finds an extremely large service volume and a severe timeout phenomenon at the same time, as shown in type 1 in FIG. 7, the radio access network device can recommend to the first communication device to use the way of alternately sending the left-eye service packets and right-eye service packets, as shown in type 2 in FIG. 7.

A specific process is as follows: A channel between the RAN and the first communication device is established in the CN, and the channel is used to carry the first information. The first information indicates a recommendation for alternately sending the left-eye service packets and right-eye service packets, with a time interval of 6 ms between the sending of the left-eye service packets and the sending of the right-eye service packets. The first communication device adjusts the service generation way according to the first information, namely, adjusts the service generation way to alternately generating left-eye data and right-eye data, with an interval of 6 ms between the generation of the left-eye data and the generation of the right-eye data. Therefore, the radio access network device can use limited radio resources to transmit the service packets to a user within a required time delay, to provide a better user experience. If the first communication device considers that the parameters recommended by the radio access network device are unreasonable, the first communication device may not adjust the parameters.

Embodiment IV: The first information includes: ratios or correspondence relationships between different contents.

For DL transmission, the radio access network device reports the recommended transmission delays of the transmission units and the ratios or correspondence relationships of the data rates of different transmission units to the first communication device according to a current receiving situation. The first communication device adjusts the ratios of the data rates of different transmission units according to a current delay requirement to ensure the transmission quality of a system.

For example, the first communication device assumes that a delay requirement of the I-frame in the radio access network device is 20 ms, the current average packet size ratio of the I-frame to the P-frame is α= 4. If the recommended parameter reported by the radio access network device is α=1.5 corresponding to the delay requirement of 10 ms of the I-frame, the first communication device adjusts α to α=3 according to the current delay requirement of 20 ms of the I-frame. If the first communication device considers that the parameters recommended by the radio access network device are unreasonable, the first communication device may not adjust the parameters.

Embodiment V: The first information is RAN configuration information.

A medium access control (Medium Access Control, MAC) layer of the radio access network device reports current power (power)-related configuration information (such as the configuration information (such as a discontinuous reception (Discontinuous Reception, DRX) cycle and a start position of the CDRX and other information), CDRX configuration update information (such as the DRX cycle changing from 10 ms to 16 ms), configuration information of a wake-up signal (wake-up signal, WUS) (such as a monitoring occasion (monitoring occasion), monitoring periodicity, and monitoring duration of the WUS signal), information of monitoring occasion of PDCCH, and information of PDCCH monitoring adaptation (such as skipping a start position/time of PDCCH monitoring and skipping a duration of monitoring)) to the first communication device. Then, the first communication device adjusts start transmission time of the transmission units according to this information to match the power-related configuration of the radio access network device, reduce a waiting delay of the service packet, and bring a better user experience.

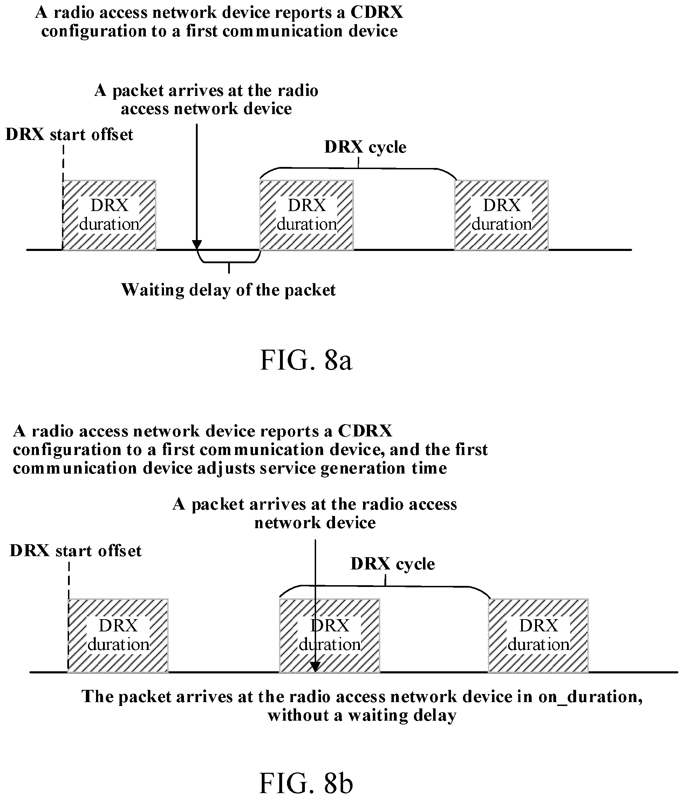

For example, as shown in FIG. 8a and FIG. 8b, when a service packet sent by the first communication device reaches the radio access network device, the terminal is in a DRX_off state. The radio access network device can schedule and transmit the service packet only when the terminal turns to a DRX on duration (on duration) state, thus generating an extra waiting delay. This has a great impact on delay-sensitive HDRLL services. The radio access network device reports a configured CDRX start offset, CDRX cycle, and duration to the first communication device. The first communication device adjusts generation times/a generation periodicity/sending times of services, so that the service packet reaches the radio access network device at the time of the on_duration state of the terminal or at the start time of the on_duration state of the terminal, which reduces the waiting delay of the service packet, brings a better user experience, and reduces the user power consumption. For example, if the service packet reaches the radio access network device at the start time of the on_duration state, the radio access network device schedules and transmits the service packet. This can reduce meaningless PDCCH monitoring of the terminal and then reduce the power consumption.

Embodiment VI: A dedicated channel is established between an AF and the radio access network device.

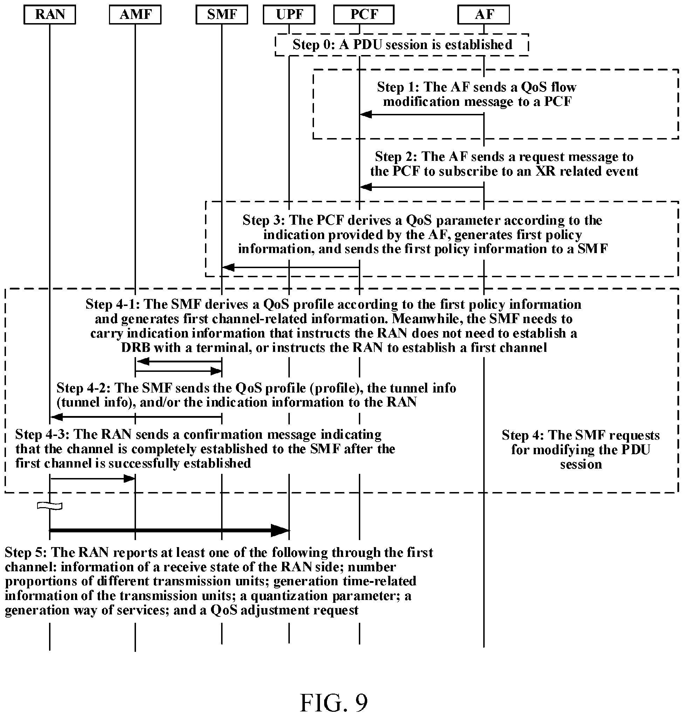

Referring to FIG. 9, a subscription event and the channel establishment are carried out simultaneously.

Step 1: The AF sends a QoS flow modification message to a policy control function (Policy Control Function, PCF). The QoS flow modification message includes an indication that is configured to instruct the PCF to establish a first channel.

Step 2: The AF sends a request message to the PCF to subscribe to an XR related event. The request message needs to carry: a target address IP.

Step 3: The PCF derives a QoS parameter according to the indication (indication) provided by the AF (along with some other existing parameters provided by the AF), generates first policy information (such as a policy and charging control rule (PCC rule), and sends the first policy information to a session management function (Session Management Function, SMF). Optionally, the sent message further carries indication information. The indication information is used for instructing the first channel to report the event or for instructing the SMF to establish a channel to report the event.

Step 4-1: The SMF derives a QoS profile (QoS profile) according to the first policy information and generates first channel-related information (such as tunnel info (tunnel info)). Meanwhile, the SMF needs to carry indication information that instructs the RAN does not need to establish a Data Radio Bearer (Data Radio Bearer, DRB) with the terminal, or instructs the RAN to establish a first channel.

Step 4-2: The SMF sends the QoS profile, the tunnel info, and/or the indication information to the RAN.

Step 4-3: According to the information provided in step 3-2, the radio access network device sends a confirmation message indicating that the channel is completely established to the SMF after the first channel is successfully established.

Step 5: The radio access network device reports at least one of the following through the first channel: a situation of transmission of a high data rate low latency (HDRLL) service of the radio access network device; information of one or more transmission units; information of an HDRLL service; a transmission condition of the radio access network device; configuration information of the radio access network device; and QoS adjustment request (or described as a QoS adjustment indication).

Embodiment VII: The scheme of establishing a dedicated channel between an AF and the radio access network device.

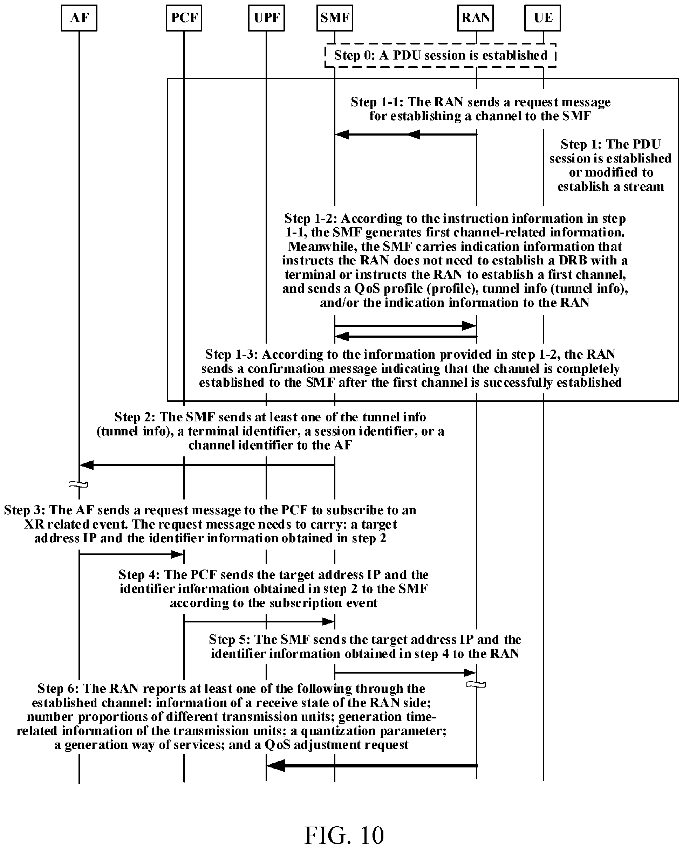

Referring to FIG. 10, a subscription event and channel establishment are independent and are associated subsequently.

Step 1-1: The radio access network device sends a request message for establishing a channel to the SMF. The request message carries indication information indicating that the established channel is for event reporting.

Step 1-2: According to the indication information in step 1-1, the SMF generates first channel-related information (tunnel info) (an interaction process with other network elements is omitted here). Meanwhile, the SMF carries indication information that instructs the radio access network device does not need to establish a DRB with the terminal or instructs the RAN to establish a first channel, and sends the QoS profile, the tunnel info, and/or the indication information to the radio access network device.

Step 1-3: According to the information provided in step 1-2, the radio access network device sends a confirmation message indicating that the channel is completely established to the SMF after the first channel is successfully established.

Step 2: The SMF sends the channel-related information (such as at least one of the tunnel info, a terminal identifier (UE ID), a session identifier, or a channel identifier) to the AF (the channel-related information may be forwarded by several network elements).

Step 3: The AF sends a request message to the PCF to subscribe to an XR related event. The request message needs to carry: a target address IP and the identifier information obtained in step 2 (including: the tunnel info, the terminal identifier, the session identifier and/or the channel identifier).

Step 4: The PCF sends the target address IP and the identifier information obtained in step 2 to the SMF according to the subscription event.

Step 5: The SMF sends the target address IP and the identifier information obtained in step 4 to the RAN. The purpose of this message is to associate the radio access network device with the AF (according to the target IP address) and the previously established channel (according to the identifier information), or to activate the previously established channel.

Step 6: The radio access network device reports at least one of the following through the established channel: information of a receive state of the radio access network device side; number proportions of different transmission units; generation time-related information of the transmission units; a quantization parameter; a generation way of services; and a QoS adjustment request.

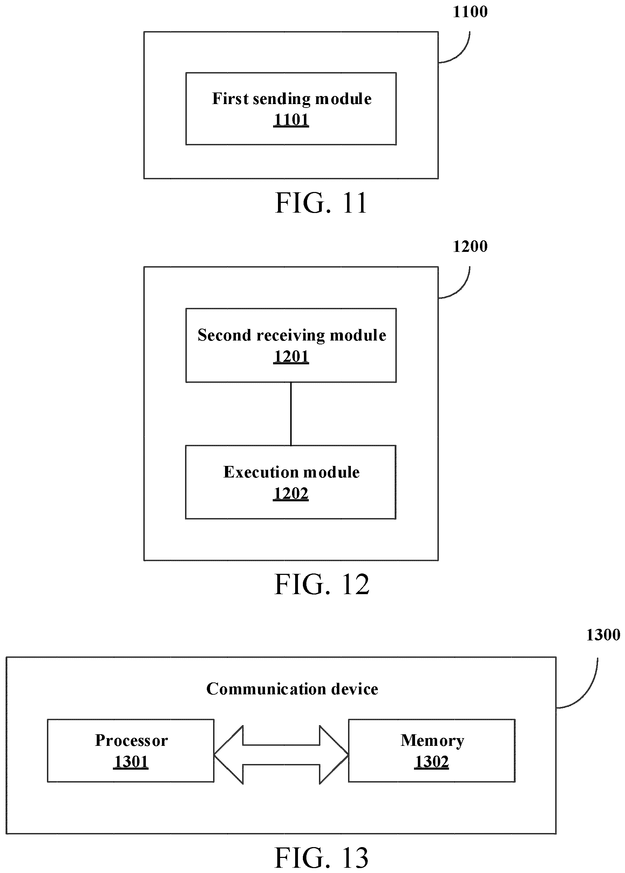

Referring to FIG. 11, the embodiments of this application provide an information reporting apparatus, which is applied to a radio access network device. The apparatus 1100 includes:
a first sending module 1101, configured to send first information to a first communication device, where the first information includes one or more of the following:
a situation of transmission of the radio access network device;
information of one or more transmission units;
information of an HDRLL service; a transmission condition of the radio access network device;
configuration information of the radio access network device; and
a QoS adjustment request of the HDRLL service.

In an implementation of this application, the situation of transmission of the radio access network device includes one or more of the following:
a transmission error rate of the one or more transmission units;
a transmission success rate of the one or more transmission units;
ratios of the transmission error rates of different transmission units;
ratios of the transmission success rates of different transmission units;
a transmission delay of the one or more transmission units;
ratios of the transmission delays of different transmission units;
a quality indication of the HDRLL service; and
re-buffer times or duration.

In an implementation of this application, the information of one or more transmission units includes one or more of the following:
a data volume of the one or more transmission units;
ratios of the data volumes of different transmission units;
a service packet size of the one or more transmission units;
ratios of the service packet sizes of different transmission units;
a number proportion of the one or more transmission units;
ratios of number of different transmission units;
information of generation time of the one or more transmission units.

In an implementation of this application, the information of generation time includes one or more of the following:
a generation periodicity of each transmission unit;
a generation number of transmission units within unit time;
a generation time interval between different transmission units;
a generation periodicity of a transmission unit group composed of a plurality of transmission units;
a generation number of transmission unit groups within unit time; and
a generation time interval between different transmission unit groups.

In an implementation of this application, the information of an HDRLL service includes one or more of the following:
a data rate of the HDRLL service;
a generation way of the HDRLL service;
a sending way of the HDRLL service;
a quantization parameter of the HDRLL service; and
an encoding way of the HDRLL service.

In an implementation of this application, the transmission condition of the radio access network device includes one or more of the following:
a channel quality indication;
an unexpected service volume;
a channel deep fading indication; and
a terminal scheduling congestion indication.

In an implementation of this application, the configuration information of the radio access network device includes one or more of the following:
configuration information of CDRX;
CDRX configuration update information;
WUS configuration information;
monitoring occasion of PDCCH; and
information of PDCCH monitoring adaptation.

In an implementation of this application, a content of the first information has one of the following characteristics:
(1) The content carried in the first information represents a value of a current configuration of the radio access network device, or a value of a current transmission condition, or a value of a predicted future transmission condition, or a statistical value of a currently transmitted HDRLL service, or a recommended value.
(2) The content carried in the first information represents that the radio access network device recommends a decrease or an increase.
(3) The content carried in the first information represents a value of a decrease or an increase recommended by the radio access network device.
(4) The first information carries ratios or correspondence relationships between different contents.

In an implementation of this application, the first sending module is further configured to: send the first information to the first communication device through a first channel, where the first channel is a dedicated channel between the first communication device and the radio access network device.

In an implementation of this application, the transmission units include one or more of the following:
a packet, where the packet includes one or more of the following: an IP packet, a left-eye packet provided for a user, and a right-eye packet provided for the user;
a frame;
an I-frame;
a P-frame;
a B-frame;
a data stream; and
an application data unit.

In an implementation of this application, the apparatus further includes:
a mapping module, configured to perform mapping according to the situation of transmission of the radio access network device, or the transmission condition of the radio access network device, or the configuration information of the radio access network device, or information recommended by the radio access network device and related to the HDRLL service, to obtain the QoS adjustment request of the HDRLL service.

In an implementation of this application, a content in the QoS adjustment request includes one or more of the following:
a QoS flow Identifier value;
a 5G QoS Identifier value; and
a priority.

In an implementation of this application, the apparatus further includes:
a first receiving module, configured to receive second information from the first communication device; and
a first processing module, configured to stop or pause the sending of the first information to the first communication device according to the second information.

In an implementation of this application, the second information represents that the first communication device has successfully received the first information.

In an implementation of this application, the second information includes first indication information, and the first indication information includes one or more of the following:
a first timer, where the radio access network device stops or pauses the sending of the first information to the first communication device before the first timer expires;
an indication bit; and
a cause value.

In an implementation of this application, the first processing module is further configured to:
start the first timer according to the second information; and
stop or pause the sending of the first information to the first communication device before the first timer expires;
   or,
start the second timer according to the second information, where the second timer is configured by the radio access network device, configured by the first communication device, or configured by the radio access network device according to a local policy; and
stop or pause the sending of the first information to the first communication device before the second timer expires.

In an implementation of this application, the first sending module is further configured to:
send the first information to the first communication device according to a reporting periodicity;
   or,
receive second indication information from the first communication device; and
send the first information to the first communication device according to the second indication information;
   or,
send the first information to the first communication device according to first time.

In an implementation of this application, the reporting periodicity is configured by the radio access network device, configured by the first communication device, or configured according to a local policy of the radio access network device.

In an implementation of this application, the first sending module is further configured to:
detect, within the first time, whether a first condition is satisfied; and
send, by the radio access network device, the first information to the first communication device at the moment that the first condition is satisfied, or send, by the radio access network device in a case that the first condition is satisfied, the first information to the first communication device at the end of the first time,
where the first condition includes one or more of the following:
a measurement quantity of the radio access network device is less than a preset threshold value;
the radio access network device receives a plurality of continuous NACKs;
the configuration information of the radio access network device changes; and
an HDRLL service packet has not been scheduled or is not completely scheduled within a PDB.

In an implementation of this application, a start condition of the first time includes one or more of the following:
a start periodicity of the first time is satisfied;
the radio access network device receives a plurality of NACKs;
the configuration information of the radio access network device changes; and
the radio access network device receives third information sent by the first communication device, where the third information indicates start of the first time.

In an implementation of this application, the start periodicity is configured by the radio access network device, configured by the first communication device, or configured according to a local policy of the radio access network device.

In an implementation of this application, a length of the first time is configured by the radio access network device, configured by the first communication device, or configured according to a local policy of the radio access network device. It can be understood that a length of the first time may be 0, that is, the start condition of the first time is also a first condition. When the start condition of the first time is satisfied, the radio access network device sends the first information to the first communication device.

In an implementation of this application, a unit of the transmission delay or the re-buffer times or the duration or the generation periodicity or the unit time or the generation time or the first timer or the second timer or the reporting periodicity or the first time or the start periodicity includes one of the following: second, millisecond, frame, subframe, slot, and symbol.

In an implementation of this application, the first communication device includes one or more of the following: a core network device and an application server.

The apparatus provided in the embodiments of this application can implement various processes implemented by the method embodiment shown in FIG. 4 and achieve the same technical effects. To avoid repetition, details are not described herein again.

Referring to FIG. 12, the embodiments of this application provide an information receiving apparatus, which is applied to a first communication device. The apparatus 1200 includes:
a second receiving module 1201, configured to receive first information, where the first information includes one or more of the following: a situation of transmission of the radio access network device; information of one or more transmission units; information of an HDRLL service; a transmission condition of the radio access network device; configuration information of the radio access network device; and a QoS adjustment request of the HDRLL service; and
an execution module 1202, configured to execute a first operation according to the first information.

In an implementation of this application, the situation of transmission of the radio access network device includes:
a transmission error rate of the one or more transmission units;
a transmission success rate of the one or more transmission units;
ratios of the transmission error rates of different transmission units;
ratios of the transmission success rates of different transmission units;
a transmission delay of the one or more transmission units;
ratios of the transmission delays of different transmission units;
a quality indication of the HDRLL service; and
re-buffer times or duration.

In an implementation of this application, the information of one or more transmission units includes one or more of the following:
a data volume of the one or more transmission units;
ratios of the data volumes of different transmission units;
a service packet size of the one or more transmission units;
ratios of the service packet sizes of different transmission units;
a number proportion of the one or more transmission units;
ratios of number of different transmission units;
information of generation time of the one or more transmission units.

In an implementation of this application, the information of generation time includes one or more of the following:
a generation periodicity of each transmission unit;
a generation number of transmission units within unit time;
a generation time interval between different transmission units;
a generation periodicity of a transmission unit group composed of a plurality of transmission units;
a generation number of transmission unit groups within unit time; and
a generation time interval between different transmission unit groups.

In an implementation of this application, the information of an HDRLL service includes one or more of the following:
a data rate of the HDRLL service;
a generation way of the HDRLL service;
a sending way of the HDRLL service;
a quantization parameter of the HDRLL service; and
an encoding way of the HDRLL service.

In an implementation of this application, the transmission condition of the radio access network device includes one or more of the following:
a channel quality indication;
an unexpected service volume;
a channel deep fading indication; and
a terminal scheduling congestion indication.

In an implementation of this application, the configuration information of the radio access network device includes one or more of the following:
configuration information of CDRX;
CDRX configuration update information;
WUS configuration information;
monitoring occasion of PDCCH; and
information of PDCCH monitoring adaptation.

In an implementation of this application, a content of the first information has one of the following characteristics:
(1) The content carried in the first information represents a value of a current configuration of the radio access network device, or a value of a current transmission condition, or a value of a predicted future transmission condition, or a statistical value of a currently transmitted HDRLL service, or a recommended value.
(2) The content carried in the first information represents that the radio access network device recommends a decrease or an increase.
(3) The content carried in the first information represents a value of a decrease or an increase recommended by the radio access network device.
(4) The first information carries ratios or correspondence relationships between different contents.

In an implementation of this application,
the first operation includes one of the following:
adjusting the HDRLL service according to the first information;
not adjusting the HDRLL service according to the first information; and
ignoring the received first information.

In an implementation of this application, the second receiving module is further configured to: receive the first information from the radio access network device through a first channel, where the first channel is a dedicated channel between the first communication device and the radio access network device.

In an implementation of this application, the apparatus further includes:
a second sending module, configured to: send second information to the radio access network device, where the second information is used for assisting the radio access network device in stopping or pausing the sending of the first information;
   or,
a third sending module, configured to: receive the first information from the radio access network device within second time, and send, in a case of satisfying a second condition, second information to the radio access network device, where the second information is used for assisting the radio access network device in stopping or pausing the sending of the first information.

Optionally, the second condition includes one or more of the following:
within the second time, transmission quality of the radio access network device is greater than a preset threshold value;
within the second time, the first information sent by the radio access network device does not change;
within the second time, the first information sent by the radio access network device changes; and
within the second time, the first information sent by the radio access network device is consistent with a behavior or configuration of the first communication device.

In an implementation of this application, the second information represents that the first communication device has successfully received the first information.

In an implementation of this application, the second information includes first indication information, and the first indication information includes one or more of the following:
a first timer, where the radio access network device stops or pauses the sending of the first information to the first communication device before the first timer expires;
an indication bit; and
a cause value.

In an implementation of this application, a length within the second time is configured by the first communication device, or configured according to a local policy of the first communication device.

In an implementation of this application, the adjustment includes one or more of the following:
adjusting QoS; and
adjusting a service feature of the HDRLL service.

In an implementation of this application, the service feature includes one or more of the following:
a data volume of the one or more transmission units;
ratios of the data volumes of different transmission units;
a service packet size of the one or more transmission units;
ratios of the service packet sizes of different transmission units;
a number proportion of the one or more transmission units;
ratios of number of different transmission units;
information of generation time of the one or more transmission units;
a data rate of the HDRLL service;
a generation way of the HDRLL service;
a sending way of the HDRLL service;
a quantization parameter of the HDRLL service; and
an encoding way of the HDRLL service.

In an implementation of this application, a unit of the transmission delay or the re-buffer times or the duration or the generation periodicity or the unit time or the generation time or the first timer or the second time or the generation time interval includes one of the following: second, millisecond, frame, subframe, slot, and symbol.

In an implementation of this application, the first communication device includes one or more of the following: a core network device and an application server.

The apparatus provided in the embodiments of this application can implement various processes implemented by the method embodiment shown in FIG. 5 and achieve the same technical effects. To avoid repetition, details are not described herein again.

Optionally, as shown in FIG. 13, the embodiments of this application further provide a communication device 1300, including a processor 1301, a memory 1302, and a program or an instruction stored on the memory 1302 and operable on the processor 1301. For example, when the communication device 1300 is a terminal, the program or instruction, when executed by the processor 1301, implements the various processes of the method embodiment in FIG. 4 described above and can achieve the same technical effects. When the communication device 1300 is a network side device, the program or instruction, when executed by the processor 1301, implements the various processes of the method embodiment in FIG. 5 described above and can achieve the same technical effects. To avoid repetition, details are not described herein again.

The embodiments of this application further provide a computer program/program product. The computer program/program product is stored in a non-volatile storage medium. The computer program/program product is executed by at least one processor to implement the steps of the processing method as described in FIG. 4 or FIG. 5.

The embodiments of this application further provide a readable storage medium. The readable storage medium can be either non-volatile or volatile. The readable storage medium stores a program or an instruction. The program or instruction, when executed by a processor, implements the various process of the method embodiment as shown in FIG. 4 or FIG. 5 described above and can achieve the same technical effects. To avoid repetition, details are not described herein again.

The processor is the processor in the terminal or network side device in the embodiments described above. The readable storage medium includes a computer-readable storage medium, for example, a computer read-only memory (Read-Only Memory, ROM), a random access memory (Random Access Memory, RAM), a magnetic disk, or an optical disk.

The embodiments of this application further provide a chip. The chip includes a processor and a communication interface. The communication interface is coupled to the processor. The processor is configured to run a program or an instruction to implement the various processes of the method embodiment as shown in FIG. 4 or FIG. 5 and can achieve the same technical effects. To avoid repetition, details are not described herein again.

It should be understood that the chip mentioned in the embodiments of this application can also be referred to as a system-on-chip, a system chip, a chip system, or a system-on-a-chip and the like.

It should be noted that, the terms "include", "comprise", or any other variations thereof here is intended to cover a non-exclusive inclusion, so that a processor, method, object, or apparatus including a series of elements not only includes those elements, but also includes other elements not specifically listed, or includes inherent elements of this process, method, object, or apparatus. Without more limitations, elements defined by the sentence "including one" does not exclude that there are still other same elements in the process, method, object, or apparatus including these elements. In addition, it should be noted that the scope of the methods and apparatuses in the embodiments of this application is not limited to executing functions in the order shown or discussed, but may also include executing functions in a substantially simultaneous manner or in an opposite order according to the functions involved. For example, the methods described may be executed in a different order than that described, and various steps may also be added, omitted, or combined. In addition, features described with reference to some examples may also be combined in other examples.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions of this application essentially or parts contributing to the related art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to execute the methods described in the various embodiments of this application.

The embodiments of this application have been described above with reference to the accompanying drawings. The present application is not limited to the specific implementations described above, and the specific implementations described above are merely exemplary and not limitative. Those of ordinary skill in the art may make various forms under the teaching of this application without departing from the spirit of this application and the protection scope of the claims, and these forms shall all fall within the protection of this application.

## Claims

1. An information receiving method, comprising:
receiving, by a first communication device, first information from a radio access network device; and
executing, by the first communication device, a first operation according to the first information,
wherein the first information comprises one or more of the following:
a situation of transmission of the radio access network device;
information of one or more transmission units;
information of a high data rate low latency (HDRLL) service;
a transmission condition of the radio access network device;
configuration information of the radio access network device; and
a quality of service (QoS) adjustment request.

2. The method according to claim 1, wherein the situation of transmission of the radio access network device comprises:
a transmission error rate of the one or more transmission units;
a transmission success rate of the one or more transmission units;
ratios of the transmission error rates of different transmission units;
ratios of the transmission success rates of different transmission units;
a transmission delay of the one or more transmission units;
ratios of the transmission delays of different transmission units;
a quality indication of the HDRLL service; and
re-buffer times or duration.

3. The method according to claim 1, wherein the information of one or more transmission units comprises one or more of the following:
a data volume of the one or more transmission units;
ratios of the data volumes of different transmission units;
a service packet size of the one or more transmission units;
ratios of the service packet sizes of different transmission units;
a number proportion of the one or more transmission units;
ratios of number of different transmission units; and
information of generation time of the one or more transmission units.

4. The method according to claim 3, wherein the information of generation time comprises one or more of the following:
a generation periodicity of each transmission unit;
a generation number of transmission units within unit time;
a generation time interval between different transmission units;
a generation periodicity of a transmission unit group composed of a plurality of transmission units;
a generation number of transmission unit groups within unit time; and
a generation time interval between different transmission unit groups.

5. The method according to claim 1, wherein the information of an HDRLL service comprises one or more of the following:
a data rate of the HDRLL service;
a generation way of the HDRLL service;
a sending way of the HDRLL service;
a quantization parameter of the HDRLL service; and
an encoding way of the HDRLL service.

6. The method according to claim 1, wherein the transmission condition of the radio access network device comprises one or more of the following:
a channel quality indication;
an unexpected service volume;
a channel deep fading indication; and
a terminal scheduling congestion indication.

7. The method according to claim 1, wherein the configuration information of the radio access network device comprises one or more of the following:
configuration information of connected discontinuous reception (CDRX);
CDRX configuration update information;
wake up signaling (WUS) configuration information;
monitoring occasion of physical downlink control channel (PDCCH); and
information of PDCCH monitoring adaptation.

8. The method according to claim 1, wherein
a content carried in the first information represents a value of a current configuration of the radio access network device, or a value of a current transmission condition, or a value of a predicted future transmission condition, or a statistical value of a currently transmitted HDRLL service, or a recommended value;
or,
a content carried in the first information represents that the radio access network device recommends a decrease or an increase;
or,
a content carried in the first information represents a value of a decrease or an increase recommended by the radio access network device;
or,
the first information carries ratios or correspondence relationships between different contents.

9. The method according to claim 1, wherein
the first operation comprises one of the following:
adjusting the HDRLL service according to the first information;
not adjusting the HDRLL service according to the first information; and
ignoring the received first information.

10. The method according to claim 1, wherein the receiving, by a first communication device, first information from a radio access network device comprises:
receiving, by the first communication device, the first information from the radio access network device through a first channel, wherein the first channel is a dedicated channel between the first communication device and the radio access network device.

11. The method according to claim 1, wherein after the receiving, by a first communication device, first information from a radio access network device, the method further comprises:
sending, by the first communication device, second information to the radio access network device, wherein the second information is used for assisting the radio access network device in stopping or pausing a sending of the first information;
or,
receiving, by the first communication device, the first information from the radio access network device within second time, and sending, by the first communication device in a case of satisfying a second condition, second information to the radio access network device, wherein the second information is used for assisting the radio access network device in stopping or pausing a sending of the first information,
wherein the second condition comprises one or more of the following:
within the second time, transmission quality of the radio access network device is greater than a preset threshold value;
within the second time, the first information sent by the radio access network device does not change;
within the second time, the first information sent by the radio access network device changes; and
within the second time, the first information sent by the radio access network device is consistent with a behavior or configuration of the first communication device.

12. The method according to claim 11, wherein the second information represents that the first communication device has successfully received the first information.

13. The method according to claim 11, wherein the second information comprises first indication information, and the first indication information comprises one or more of the following:
a first timer, wherein the radio access network device stops or pauses the sending of the first information to the first communication device before the first timer expires;
an indication bit; and
a cause value.

14. The method according to claim 9, wherein the adjusting comprises one or more of the following:
adjusting QoS; and
adjusting a service feature of the HDRLL service.

15. The method according to claim 14, wherein the service feature comprises one or more of the following:
a data volume of the one or more transmission units;
ratios of the data volumes of different transmission units;
a service packet size of the one or more transmission units;
ratios of the service packet sizes of different transmission units;
a number proportion of the one or more transmission units;
ratios of number of different transmission units;
information of generation time of the one or more transmission units;
a data rate of the HDRLL service;
a generation way of the HDRLL service;
a sending way of the HDRLL service;
a quantization parameter of the HDRLL service; and
an encoding way of the HDRLL service.

16. The method according to claim 2 or 3 or 4 or 11 or 13 or 15, wherein a unit of the transmission delay or the re-buffer times or the duration or the generation periodicity or the unit time or the generation time or the first timer or the second time or the generation time interval comprises one of the following: second, millisecond, frame, subframe, slot, and symbol.

17. The method according to claim 1, wherein the first communication device comprises one or more of the following: a core network device and an application server.

18. An information reporting method, comprising:
sending, by a radio access network device, first information to a first communication device, wherein the first information comprises one or more of the following:
a situation of transmission of the radio access network device;
information of one or more transmission units;
information of an HDRLL service;
a transmission condition of the radio access network device;
configuration information of the radio access network device; and
a QoS adjustment request.

19. The method according to claim 18, wherein the situation of transmission of the HDRLL service by the radio access network device comprises one or more of the following:
a transmission error rate of the one or more transmission units;
a transmission success rate of the one or more transmission units;
ratios of the transmission error rates of different transmission units;
ratios of the transmission success rates of different transmission units;
a transmission delay of the one or more transmission units;
ratios of the transmission delays of different transmission units;
a quality indication of the HDRLL service; and
re-buffer times or duration.

20. The method according to claim 18, wherein the information of one or more transmission units comprises one or more of the following:
a data volume of the one or more transmission units;
ratios of the data volumes of different transmission units;
a service packet size of the one or more transmission units;
ratios of the service packet sizes of different transmission units;
a number proportion of the one or more transmission units;
ratios of number of different transmission units;
information of generation time of the one or more transmission units.

21. The method according to claim 20, wherein the information of generation time comprises one or more of the following:
a generation periodicity of each transmission unit;
a generation number of transmission units within unit time;
a generation time interval between different transmission units;
a generation periodicity of a transmission unit group composed of a plurality of transmission units;
a generation number of transmission unit groups within unit time; and
a generation time interval between different transmission unit groups.

22. The method according to claim 18, wherein the information of an HDRLL service comprises one or more of the following:
a data rate of the HDRLL service;
a generation way of the HDRLL service;
a sending way of the HDRLL service;
a quantization parameter of the HDRLL service; and
an encoding way of the HDRLL service.

23. The method according to claim 18, wherein the transmission condition of the radio access network device comprises one or more of the following:
a channel quality indication;
an unexpected service volume;
a channel deep fading indication; and
a terminal scheduling congestion indication.

24. The method according to claim 18, wherein the configuration information of the radio access network device comprises one or more of the following:
configuration information of CDRX;
CDRX configuration update information;
WUS configuration information;
monitoring occasion of PDCCH; and
information of PDCCH monitoring adaptation.

25. The method according to claim 18, wherein
a content carried in the first information represents a value of a current configuration of the radio access network device, or a value of a current transmission condition, or a value of a predicted future transmission condition, or a statistical value of a currently transmitted HDRLL service, or a recommended value;
or,
a content carried in the first information represents that the radio access network device recommends a decrease or an increase;
or,
a content carried in the first information represents a value of a decrease or an increase recommended by the radio access network device;
or,
the first information carries ratios or correspondence relationships between different contents.

26. The method according to claim 18, wherein the sending, by a radio access network device, first information to a first communication device comprises:
sending, by the radio access network device, the first information to the first communication device through a first channel, wherein the first channel is a dedicated channel between the first communication device and the radio access network device.

27. The method according to claim 18, wherein the transmission units comprise one or more of the following:
a packet, wherein the packet comprises one or more of the following: an IP packet, a left-eye packet provided for a user, and a right-eye packet provided for the user;
a frame;
an I-frame;
a P-frame;
a B-frame;
a data stream; and
an application data unit.

28. The method according to claim 18, wherein the method further comprises:
performing mapping by the radio access network device according to the situation of transmission of the radio access network device, or the transmission condition of the radio access network device, or the configuration information of the radio access network device, or information recommended by the radio access network device and related to the HDRLL service, to obtain the QoS adjustment request of the HDRLL service.

29. The method according to claim 18 or 28, wherein a content in the QoS adjustment request comprises one or more of the following:
a QoS flow Identifier value;
a 5G QoS Identifier value; and
a priority.

30. The method according to claim 18, wherein after the sending, by a radio access network device, first information to a first communication device, the method further comprises:
receiving, by the radio access network device, second information from the first communication device; and
stopping or pausing, by the radio access network device, the sending of the first information to the first communication device according to the second information.

31. The method according to claim 30, wherein the second information represents that the first communication device has successfully received the first information.

32. The method according to claim 30, wherein the second information comprises first indication information, and the first indication information comprises one or more of the following:
a first timer, wherein the radio access network device stops or pauses the sending of the first information to the first communication device before the first timer expires;
an indication bit; and
a cause value.

33. The method according to claim 32, wherein the stopping or pausing, by the radio access network device, the sending of the first information to the first communication device according to the second information comprises:
starting, by the radio access network device, the first timer according to the second information;
stopping or pausing, by the radio access network device, the sending of the first information to the first communication device before the first timer expires;
or,
starting, by the radio access network device, a second timer according to the second information, wherein the second timer is configured by the radio access network device, configured by the first communication device, or configured by the radio access network device according to a local policy; and
stopping or pausing, by the radio access network device, the sending of the first information to the first communication device before the second timer expires.

34. The method according to claim 18, wherein the sending, by a radio access network device, first information to a first communication device comprises:
sending, by the radio access network device, the first information to the first communication device according to a reporting periodicity;
or,
receiving, by the radio access network device, second indication information from the first communication device;
sending, by the radio access network device, the first information to the first communication device according to the second indication information;
or,
sending, by the radio access network device, the first information to the first communication device according to first time.

35. The method according to claim 34, wherein the sending, by the radio access network device, the first information to the first communication device according to first time comprises:
detecting, by the radio access network device within the first time, whether a first condition is satisfied;
sending, by the radio access network device, the first information to the first communication device at a moment that the first condition is satisfied, or sending, by the radio access network device in a case that the radio access network device satisfies the first condition, the first information to the first communication device at an end of the first time,
wherein the first condition comprises one or more of the following:
a measurement quantity of the radio access network device is less than a preset threshold value;
the radio access network device receives a plurality of continuous negative acknowledgments (NACK);
the configuration information of the radio access network device changes; and
an HDRLL service packet has not been scheduled or is not completely scheduled within a packet delay budget.

36. The method according to claim 34, wherein a start condition of the first time comprises one or more of the following:
a start periodicity of the first time is satisfied;
the radio access network device receives a plurality of NACKs;
the configuration information of the radio access network device changes; and
the radio access network device receives third information sent by the first communication device, wherein the third information indicates start of the first time.

37. The method according to claim 18, wherein the first communication device comprises one or more of the following: a core network device and an application server.

38. An information receiving apparatus, comprising:
a second receiving module, configured to receive first information; and
an execution module, configured to execute a first operation according to the first information,
wherein the first information comprises one or more of the following:
a situation of transmission of a radio access network device;
information of one or more transmission units;
information of an HDRLL service;
a transmission condition of the radio access network device;
configuration information of the radio access network device; and
a QoS adjustment request of the HDRLL service.

39. An information reporting apparatus, comprising:
a first sending module, configured to send first information to a first communication device, wherein the first information comprises one or more of the following:
a situation of transmission of a radio access network device;
information of one or more transmission units;
information of an HDRLL service; a transmission condition of the radio access network device;
configuration information of the radio access network device; and
a QoS adjustment request of the HDRLL service.

40. A communication device, comprising: a processor, a memory, and a program stored on the memory and executable on the processor, wherein the program, when executed by the processor, implements steps of the method according to any one of claims 1 to 37.

41. A readable storage medium, the readable storage medium storing a program or an instruction, wherein the program or instruction, when executed by a processor, executes steps of the method according to any one of claims 1 to 37.
